# DEMANDE DE BREVET EUROPEEN

(11) **EP 1 362 936 A1**
(43) Date de publication de la demande: **19.11.2003**
(21) Numéro de dépôt: 02100472.6
(22) Date de dépôt: 10.05.2002
(51) Int. Cl.: D01F 8/06, C04B 16/06

(54) **Procédé pour produits façonnés en fibres-ciment et fibres de renforcement pour de tels produits.**

(71) Demandeur: REDCO S.A., 1880 Kapelle-op-den-Bos. (BE)
(72) Inventeur: DE LHONEUX, Benoît, 1367, Geest-Gérompont (Ramillies) (BE); VIDTS, Dirk, 1860, Meise (BE)
(74) Mandataire: Plucker, Guy

(57) **Abrégé**

L'invention concerne des fibres pour le renforcement de produits en fibres-ciment ainsi que l'utilisation de ces fibres et les produits en fibres-ciment ou en béton renforcés par de telles fibres.

Les fibres de polypropylène suivant l'invention comportent une âme et une gaine. Cette gaine contient une proportion d'élastomère thermoplastique éventuellement modifié par greffage. De plus cette gaine peut faire l'objet, en surface, d'un dépôt de polymères organiques comportant des monomères oléfiniques et modifiés par des groupes polaires.

Ce dépôt est obtenu par traitement de surface à l'aide d'une dispersion aqueuse des polymères.

Les produits en fibres-ciment suivant l'invention présentent des caractéristiques mécaniques améliorées.

## Description

La présente invention concerne une nouvelle fibre de renforcement pour produits façonnés en fibres-ciment, un procédé de traitement de cette fibre, ainsi que les produits en fibres-ciment renforcés par cette fibre.

On réalise en fibres-ciment des produits solides façonnés les plus divers : des éléments de toiture et de façade (ardoises), des plaques planes ou ondulées, des tubes et des réservoirs de stockage.

Ces produits sont fabriqués au départ d'une suspension aqueuse à prise hydraulique comportant des liants hydrauliques, des fibres de renforcement et éventuellement de mise en oeuvre, et éventuellement des charges. Cette suspension aqueuse est mélangée afin d'obtenir une distribution en substance uniforme des composants. La suspension est alors égouttée. Le produit frais ainsi obtenu peut ensuite être façonné, puis laissé à durcir dans des conditions atmosphériques ou bien encore dans des conditions de pression, de température et d'humidité spécifiques.

Le procédé de fabrication le plus répandu est le procédé Hatschek, dont la technologie a été appliquée à l'origine à l'amiante-ciment. D'autres procédés de fabrication sont les procédés Magnani, Mazza, Flow-on, d'extrusion et d'injection.

Le procédé Hatschek est basé sur l'utilisation de machines d'égouttage à tamis cylindrique. Dans ce procédé, un mat provenant d'une suspension diluée de fibres, de ciment et de charges contenue dans un cuvier est transféré à un feutre, par l'intermédiaire d'un égouttoir cylindrique, et est ensuite enroulé jusqu'à l'épaisseur requise à l'aide de cylindres de formage. Pour la fabrication de feuilles ondulées, la feuille en fibres-ciment formée sur le cylindre de formage est tranchée et détachée de ce cylindre après que l'épaisseur souhaitée a été atteinte. Cette feuille est ensuite façonnée et mise à durcir entre des formes en métal ondulé huilé.

Pour certaines applications il s'avère utile de comprimer le produit frais après sa mise en forme mais avant son durcissement (post-compression). On fait ainsi la distinction entre les produits façonnés en fibres-ciment non comprimés et les produits façonnés en fibres-ciment comprimés.

L'amiante présente tant des propriétés de renforcement dues à sa résistance à la traction propre que des qualités de mise en oeuvre en relation avec l'excellente aptitude à la dispersion dans une suspension aqueuse de ciment. Pendant le stade d'égouttage, en raison des bonnes propriétés de filtration et de la bonne affinité pour le ciment, les fibres d'amiante peuvent retenir les fines particules en suspension du mélange composite en cours de façonnage. Dans le produit final hydraté, la haute résistance en traction combinée avec le module d'élasticité élevé et le faible allongement à la rupture contribuent à conférer aux produits manufacturés en amiante-ciment leur haute résistance en flexion connue.

Toutefois, l'amiante étant devenu un composant indésirable pour des raisons tenant à l'environnement et à la santé, des efforts importants ont été consacrés en vue de le remplacer.

Il est dès lors souhaitable d'utiliser de nouvelles fibres comme agents de renforcement et aussi comme auxiliaires de mise en oeuvre à utiliser avec les liants hydrauliques, par exemple pour le renforcement du ciment.

On n'a découvert aucune fibre naturelle ou synthétique manifestant toutes les propriétés des fibres d'amiante. La résistance aux alcalis dans les solutions saturées d'hydroxyde de calcium est un critère particulier auquel doivent répondre les fibres de renforcement du ciment.

Il est encore important que les fibres puissent être dispersées aisément dans une suspension aqueuse diluée de ciment et restent aussi dispersées uniformément lors de l'apport d'autres additifs, lorsque ces fibres doivent être mises en oeuvre par des techniques d'égouttage pour donner des produits en fibres-ciment. La bonne dispersion des fibres est importante à la fois pour qu'elles ne forment pas d'agglomérats et que la densité de fibres soit homogène dans le produit en fibres-ciment fini, mais aussi pour que les fibres ne s'orientent pas dans une direction commune.

En effet, si les fibres adoptaient une direction préférentielle, le produit en fibres-ciment aurait alors une résistance différente selon la direction de la force de rupture.

La littérature contient d'innombrables publications à propos de l'utilisation de fibres organiques et inorganiques naturelles ou synthétiques. Les fibres faites de cellulose, de polyamide, de polyester, de polyacrylonitrile, de polypropylène PP et de poly(alcool vinylique) PVA, entre autres, ont déjà fait l'objet d'investigations pour le renforcement du ciment. De même, on connaît des travaux sur des fibres faites de verre, d'acier, d'aramide et de carbone. Parmi toutes ces fibres, aucune n'a jusqu'à présent toutes les propriétés requises, spécialement pour le ciment.

Parmi les fibres de renforcement actuellement utilisées, les fibres de PVA sont généralement les plus utilisées. Isolément ou en combinaison, ces fibres permettent de procurer un produit façonné en fibres-ciment ayant une résistance à la traction élevée en combinaison avec une ductilité acceptable. Malheureusement, les fibres de PVA sont coûteuses et augmentent considérablement le prix de revient des produits en fibres-ciment les contenant.

Les fibres de PP, ont une excellente résistance aux alcalis, même à des températures pouvant aller jusque 110° C. Ce sont des fibres durables et peu coûteuses. Cependant, il est généralement affirmé que les fibres de PP sont techniquement insuffisantes lorsqu'il s'agit de renforcer des matériaux dont la matrice à base de ciment est relativement cassante.

On a déjà cherché à améliorer les propriétés des fibres de PP notamment par l'incorporation d'additifs dans la masse des fibres. Le document JP 6-219797 décrit des fibres de PP bicomposantes contenant dans leur partie périphérique du carbonate de calcium. Dans GB 2 030 891, des particules dissemblables sont enchâssées par bombardement dans des fibres thermoplastiques.

Les documents GB 2 021 552, WO 94/20654, EP 0 240 167, et WO 87/04144 décrivent des produits à prise hydraulique dont les fibres de renforcement sont réalisées au départ de polymère modifié. Les fibres sont donc à chaque fois modifiées dans la masse, ce qui entraîne de nombreux désavantages.

Cette incorporation d'additifs dans la masse même des fibres de PP augmente les coûts de fabrication et entraîne une modification des caractéristiques mécaniques de la fibre de renforcement, notamment en diminuant sa ténacité.

Le document EP 0 310 100 décrit également des fibres de polyoléfine contenant des particules inorganiques enchâssées dans la masse de la fibre, aucune des particules n'étant exposée à la surface de la fibre. Ces fibres sont fabriquées au départ d'un film qui peut avoir subi certains traitements de surface. Les traitements de surface mentionnés consistent en des modifications chimiques, électriques ou mécaniques de la fibre. Ce document mentionne également l'application de tensioactifs à la surface de la fibre.

On connaît encore (EP 0 535 373) des fibres de PP stéréorégulier ayant une résistance à la traction élevée. Dans le brevet EP 0 537 129 sont décrits des produits manufacturés façonnés solides en ciment renforcés par ce type de fibres de PP.

Un problème encore rencontré dans les produits en fibres-ciment en plaques renforcés par ce type de fibres est l'apparition de fissures dans les bords de la plaque en particulier au cours du vieillissement à long terme de ces produits.

D'autre part, le travail de rupture a une importance considérable pour l'utilisation des produits en fibres-ciment. Une valeur élevée (produit à haute ductilité) est recherchée. Une haute ductilité est en outre importante afin de pouvoir, le cas échéant, usiner les pièces en fibres-ciment : forer, clouer, scier, etc. Enfin, la sécurité au cours de l'utilisation des produits, tels que les toitures, s'en trouve également augmentée, car on évite ainsi des ruptures trop rapides ou trop violentes sous charge.

Dans les produits en fibres-ciment non comprimés, renforcés par des fibres de PP, le travail de rupture a généralement une valeur très faible.

Au vu des raisons énumérées ci-dessus, en particulier à cause de leur faible résistance à la fissuration et de leur faible travail de rupture, l'utilisation des produits en fibres-ciment comprimés et non comprimés, dont les fibres de renforcement sont des fibres de PP, est restée jusqu'à présent très limitée.

On peut noter que certaines fibres de PP sont utilisées, en faible quantité, dans des produits en béton, pour en réduire la fissuration. Mais par rapport au béton, les produits en fibres-ciment sont caractérisés par un très grand rapport surface/épaisseur. Le problème de fissuration de tels produits est donc complètement différent de celui de produits massifs en béton. Dans les produits en fibres-ciment, les fibres doivent réellement remplir une fonction de renforcement, alors que dans les produits en béton, la quantité de fibres est nettement moins importante et ne remplit pas réellement cette fonction de renforcement. De plus, les proportions des différents constituants, notamment de ciment et d'eau, sont très différentes dans les produits en fibres-ciment et dans les produits en béton. De même, les conditions de mises en oeuvre sont tout à fait différentes.

On a par la suite divulgué (WO 99/19268) que des fibres de PP, même ordinaire, mais ayant subi un traitement de surface à l'aide d'une dispersion aqueuse polymérique, donnaient de bons résultats : il était ainsi possible de réaliser un produit façonné en fibres-ciment présentant un travail de rupture élevé et une bonne résistance à la fissuration, au moyen de fibres de PP ayant subi ce traitement de surface.

On évitait ainsi les inconvénients propres à l'état de la technique du moment, tout en maintenant un bas prix de revient.

Cette fibre de PP pour le renforcement de produits façonnés en fibres-ciment, entrait dans une composition à prise hydraulique comprenant notamment de l'eau, des liants hydrauliques et des fibres de mise en oeuvre. La fibre de PP comportait un dépôt de polymère organique comportant des monomères oléfiniques et comportant des groupes polaires, ce dépôt ayant été appliqué par traitement de surface à l'aide d'une dispersion aqueuse de ce polymère.

La dispersion aqueuse comportait, seul ou en mélange, un polymère organique choisi parmi les homopolymères et copolymères de monomères oléfiniques modifiés après synthèse (par exemple par greffage) par des groupes polaires.

Les groupes polaires étaient choisis, par exemple, parmi l'anhydride maléique, l'acide acrylique ou l'acide méthacrylique.

Une autre façon d'améliorer l'accrochage des fibres de PP, très cristallines et hydrophobes, dans une matrice cimentaire a été divulguée dans le document EP 1 044 939, en comparaison avec des fibres de PVA. Si le traitement de fibres de PP par un bain d'une émulsion de PP greffé à l'anhydride maléique améliore le comportement, en particulier concernant la résistance à la fissuration, il a été démontré qu'un traitement corona antérieur favorise encore d'avantage l'accrochage par la matrice cimentaire, notamment en augmentant l'accrochage du traitement de surface par émulsion.

Quoiqu'il en soit, ces traitements corona/émulsion ne sont que très superficiels ; d'autre part le traitement par corona à tendance à fragiliser la fibre. De plus, la durée de leur efficacité dans le temps reste inconnue. Ceci est un facteur de risque important en ce qui concerne la durabilité du produit renforcé par de telles fibres.

On a donc encore cherché à améliorer l'accrochage du PP dans une matrice cimentaire par un traitement plus en profondeur de manière à ce que les fibres soient moins sensibles :
1) aux conditions de mise en oeuvre (procédé Hatschek qui comporte une agitation violente dans un milieu abrasif et fortement alcalin)
2) et une fois incorporées dans le produit fini, aux phénomènes liés aux intempéries (en particulier les cycles de mouvement hydrique et de gel/dégel auxquels le composite est soumis).

La présente invention concerne des fibres de renforcement PP bicomposantes, constituées d'une âme et d'une gaine, éventuellement concentriques, l'âme et la gaine pouvant ou non être constitués de la même matière. Le rapport en volume de la matière constituant la gaine par rapport à la matière de l'âme de la fibre va de 50/50 à 5/95, de préférence 20/80.

La présente invention consiste à introduire dans la gaine extérieure un copolymère de type élastomère thermoplastique comme par exemple l'éthylène-propylène, le styrène-butadiène hydrogéné, le styrène-butadiène-styrène, le styrène-butylène-styrène, le styrène-éthylène-butylène-styrène, le butadiène-acrylonitrile. Cet élastomère thermoplastique peut avoir été greffé dans la masse par exemple avec de l'anhydride maléique. Les teneurs en élastomère dans la gaine peuvent varier entre 5 et 50 % en volume, de préférence entre 10 et 30 % en volume et plus particulièrement entre 15 et 20 % en volume par rapport au volume de la matière de la gaine.

On constate alors (ce qui est attendu) que les propriétés propres des fibres diminuent ; par contre il est tout à fait surprenant de voir que les caractéristiques du produit fibres-ciment se maintiennent, voire s'améliorent de façon spectaculaire. C'est ainsi qu'avec des fibres de renforcement en théorie moins performantes, les produits finis à base des fibres suivant l'invention présentent des propriétés mécaniques supérieures.

Les fibres de PP suivant l'invention, ont de manière préférée, un titre compris entre 0,5 et 10 dtex, et de manière encore plus préférée 0,5 et 2 dtex.

Les fibres peuvent être coupées avantageusement en longueur pouvant aller de 2 à 20 mm; de préférence la longueur des fibres s'échelonne de 5 à 10 mm. La section des fibres peut être circulaire ou de forme irrégulière, par exemple en forme de X ou Y. Les fibres peuvent être crêpées pendant qu'elles sont étirées ou après. La technique de crêpage des fibres peut inclure des opérations telles que la fausse torsion, le traitement d'enchevêtrement par courant d'air (comprenant le traitement TASLAN) ou le traitement par compression (à savoir à la boîte de bourrage).

Les fibres suivant l'invention peuvent également être obtenues par fibrillation d'un film de PP extrudé. Les fibres peuvent alors présenter une forme de ruban.

Les fibres de renforcement peuvent être obtenues au départ de résine de tout type de PP couramment utilisé.

La présente invention a également pour objet un procédé de traitement de surface de fibres de PP telles que décrites ci-dessus, pour le renforcement de produits en fibres-ciment. Ce procédé consiste à soumettre ces fibres à un effet corona, ou encore, à mettre ces fibres de PP en contact avec une dispersion aqueuse de polymères organiques comportant des monomères oléfiniques et comportant des groupes polaires.

D'une manière avantageuse, les fibres de PP ayant subi ledit traitement comprennent de 0,05 à 5 % en poids, de préférence de 0,15 à 1,5 % en poids, de dépôt de polymère organique comportant des monomères oléfiniques et comportant des groupes polaires, par rapport au poids total de la fibre.

Ces différents traitements de surface peuvent être prévus successivement lors de la fabrication des fibres de renforcement. D'une manière préférée, les fibres peuvent alors être traitées en surface suivant les techniques décrites dans les demandes EP 1 044 939 et WO 99/19268 incorporées comme référence dans la présente demande.

La présente invention a aussi pour objet des produits façonnés en fibres-ciment comportant des fibres de renforcement telles que décrites ci-dessus et traitées en surface par les procédés décrits dans les demandes EP 1 044 939 et WO 99/19268.

De manière préférée, les produits en fibres-ciment comprennent de 0,3 à 4% et de manière encore préférée de 0,5 à 2,5 % en poids par rapport au mélange sec total initial, de fibres de PP suivant l'invention.

Le produit suivant l'invention peut, par exemple, être un élément de toiture ou de façade, telle qu'un bloc massif, une plaque plane, une plaque ondulée, ou tous autres éléments accessoires de formes diverses.

L'invention est décrite ci-après de façon plus détaillée à l'aide d'exemples particuliers de réalisation.

### EXEMPLES

Dans les exemples suivants, des produits en fibres-ciment renforcés par des fibres de PP suivant l'invention et traitées ou non en surface, sont comparés à des produits en fibres-ciment réalisés avec des fibres de référence ne comportant pas d'élastomère dans la gaine.

Les exemples de fibres avec traitement en surface sont traités :
a) d'abord par corona (au moyen d'un appareil de décharge de Ahlbrandt GmbH) ;
b) puis par un bain de Michelman 94340-E contenant l'émulsion à raison de 7 % de PP modifié par l'anhydride maléique (selon la description du document EP 1 044 939).

Le PP utilisé pour les âmes et les gaines des fibres produites pour les différents essais, est le grade Escorene 3684F3 de Exxon Mobil.

Comme les élastomères, on trouve sur le marché des élastomères thermoplastiques de type éthylène-propylène sous forme de copolymère hétérophasique où l'élastomère est finement dispersé dans une matrice d'homopolymère PP. Nous avons de préférence utilisé :
A) ADFLEX X102S (une polyoléfine commercialisée par Montell contenant de 55 à 75 % en poids d'élastomère);
B) QESTRON KA 802 A (une polyoléfine thermoplastique copolymère hétérophasique, greffée par de l'anhydride maléique, commercialisée par Montell et contenant également entre 55 et 75 % en poids d'élastomère).
   Nous avons également utilisé des élastomères thermoplastiques de type styrène-butadiène hydrogéné, parmi lesquels nous préférons :
C) DYNARON 1320P (commercialisé par JSR Corporation).

### Préparation des mélanges et mise en oeuvre sur machine Hatschek.

Les composés suivants sont mélangés dans de l'eau :
- 77,2 % de ciment Portland ordinaire ;
- 1,8 % de fibres de PP bicomposantes avec un rapport en volume âme/gaine de 80/20, traitées ou non en surface par corona puis par l'émulsion de PP modifié par l'anhydride maléique ;
- 3,0 % de pâte de cellulose Kraft raffinée jusqu'à 65°SR (Schopper-Riegler) ;
- 3,0 % de silice amorphe ;
- 15,0 % de carbonate de calcium.

Les concentrations données sont les concentrations en solides par rapport à la matière sèche totale. On dilue cette suspension avec de l'eau jusqu'à une concentration en solides de 30 g/l et on la transfère ensuite au cuvier d'une machine Hatschek.

Peu avant l'introduction de la suspension dans le cuvier, on ajoute 200 ppm en poids d'un agent de floculation de type polyacrylamide pour améliorer la rétention du ciment. On produit des plaques à l'aide de la machine par 22 tours du cylindre de formage.

Dans le cas des produits comprimés, les plaques sont ensuite pressées entre des moules en acier huilé dans une presse sous une pression spécifique appliquée de 17,7 MPa, jusqu'à une épaisseur moyenne de 5,5 mm. On fait durcir les feuilles sous couverture de matière plastique pendant 28 jours dans une humidité relative de 100% à 20°C.

### Essais mécaniques de résistance à la flexion

On exécute les essais mécaniques à l'état sec, à l'air. On détermine tout d'abord la résistance en flexion des échantillons sur une machine d'essai mécanique au cours d'un essai classique de flexion sur trois points.

L'appareil enregistre la courbe contrainte/déformation et permet de déterminer le module de rupture (MOR). Le travail de rupture sous charge maximum (IMOR) est l'intégrale de la courbe contrainte/déformation jusqu'à la rupture.

Pour faciliter les comparaisons, les valeurs des échantillons de référence (donc renforcés par des fibres sans élastomère thermoplastique dans la gaine et sans aucun traitement de surface) ont arbitrairement été fixées à 100 (essai Ref.). Les résultats des échantillons suivant l'invention apparaîtront donc en valeur relative.

Ces échantillons ont été réalisés avec des fibres comportant 20 % en volume dans la gaine :
- de copolymère hétérophasique Adflex (essai A1 si la fibre utilisée est non traité en surface, essai A2 si la fibre utilisée est traitée en surface par corona puis par l'émulsion) ;
- de copolymère hétérophasique Qestron (essai B avec traitement en surface corona et émulsion) ;
- de l'élastomère styrène-butadiène Dynaron (essai C également traité en surface corona et émulsion).

Différents types de produits façonnés ont été testés, à savoir :
- UPWS ou produit non comprimé saturé en eau par immersion pendant 48 h ;
- UPAD ou produit non comprimé séché à l'air libre;
- PWS ou produit comprimé saturé en eau par immersion pendant 48 h ;
- PAD ou produit comprimé séché à l'air libre.

Les résultats sont donnés au tableau I ci-après.

**TABLEAU I**

| Produit | Test | Ref. | A1 | A2 | B | C |
|---|---|---|---|---|---|---|
| UPWS | MOR | 100 | 110 | 123 | 131 | 122 |
| | IMOR | 100 | 120 | 192 | 250 | 197 |
| UPAD | MOR | 100 | 112 | 118 | 128 | 116 |
| | IMOR | 100 | 480 | 610 | 850 | 650 |
| PWS | MOR | 100 | 107 | 112 | 117 | 110 |
| | IMOR | 100 | 105 | 108 | 130 | 112 |
| PAD | MOR | 100 | 125 | 120 | 128 | 123 |
| | IMOR | 100 | 60 | 77 | 128 | 82 |

On peut déduire du tableau I ci-dessus, que les produits en fibres-ciment non comprimés renforcés par des fibres de PP selon l'invention, présentent des valeurs MOR et IMOR nettement plus élevées que celles du produit en fibres-ciment utilisant les fibres de PP de référence, à l'exception du travail de rupture du produit comprimé et séché à l'air libre. Cependant, même dans ce cas moins favorable, il est possible d'obtenir avec l'un des élastomères thermoplastiques (essai B), des valeurs MOR et IMOR supérieures à celles du produit en fibres-ciment avec des fibres de PP de référence.

### Essai de traction sur fibres

On exécute les essais sur une machine d'essai mécanique classique qui permet de déterminer la ténacité, l'élongation maximale ainsi que le module d'élasticité des 4 types de fibres mises en oeuvre à l'exemple précédent.

Ces résultats ont été obtenus sur des fibres avec 20 % en volume des produits A, B, et C, dans la gaine de PP. De plus, le titre moyen de ces 4 types de fibres est tout à fait comparable.

Pour faciliter les comparaisons, les valeurs des échantillons selon l'invention (A, B et C) sont exprimées par rapport à la valeur mesurée de l'échantillon de référence (sans élastomère thermoplastique). Les résultats des échantillons selon l'invention apparaissent donc en valeur relative au tableau II ci-après.

**TABLEAU II**

| Essai | Unité | Ref. | A en % relatif | B en % relatif | C en % relatif |
|---|---|---|---|---|---|
| Titre | dtex | 1,11 | 115 | 86 | 105 |
| Ténacité | cN/dtex | 10,2 | 96 | 92 | 94 |
| Elongation | % | 21,8 | 92 | 82 | 90 |
| Module élasticité | cN/dtex | 132 | 89 | 95 | 96 |

On peut déduire du tableau II ci-dessus, que l'introduction d'un élastomère dans la gaine des fibres selon l'invention diminue leurs propriétés mécaniques (comme la résistance à la traction et le module d'élasticité en traction) en comparaison avec la fibre de référence. Pour des fibres présentant un titre comparable ou parfois supérieur, au titre de la fibre de référence (sans élastomère thermoplastique), la perte en ténacité est de l'ordre de 4 à 8 %. Cette perte est attendue puisque pour 20 % du volume de la gaine, représentant elle-même 20 % du volume total de la fibre, on a remplacé du PP haute ténacité par un élastomère thermoplastique aux propriétés mécaniques considérablement plus faibles.

On peut donc en conclure que l'utilisation des fibres selon l'invention permet d'obtenir des produits en fibres-ciment renforcés, dont le module de rupture (MOR) et le travail de rupture sous charge maximum (IMOR) sont nettement supérieures à ceux des produits en fibres-ciment réalisés avec les fibres de référence ; cela est observé malgré que les caractéristiques des fibres de référence soient supérieures à celles des fibres suivant l'invention. L'invention permet par un traitement de surface, simple et non coûteux, sur des fibres de PP comportant un élastomère thermoplastique, d'augmenter les caractéristiques mécaniques essentielles des produits en fibres-ciment renforcés par ces fibres.

Etant donné que les fibres selon l'invention sont particulièrement adaptées aux contraintes sévères propres aux produits en fibres-ciment décrits ci-dessus, leur utilisation dans des produits plus massifs tels que des ouvrages en béton est particulièrement avantageuse, en tant qu'agent réduisant la fissuration.

## Revendications

1. Fibre pour le renforcement de produits en fibres-ciment, **caractérisée en ce qu'**elle comprend une âme de polypropylène et une gaine concentrique qui comprend un mélange de polypropylène et d'un élastomère thermoplastique.

2. Fibre suivant la revendication 1, **caractérisée en ce que** l'élastomère thermoplastique est un copolymère à base de comonomères choisis parmi le groupe de l'éthylène-propylène, du styrène-butadiène hydrogéné, du styrène-butadiène-styrène, du styrène-butylène-styrène, du styrène-éthylène-butylène-styrène, du butadiène-acrylonitrile.

3. Fibre suivant l'une quelconque des revendications précédentes, **caractérisée en ce que** l'élastomère thermoplastique est un élastomère thermoplastique modifié par greffage au moyen de groupes polaires choisis parmi l'anhydride maléique, l'acide acrylique ou l'acide méthacrylique.

4. Fibre suivant l'une quelconque des revendications précédentes, **caractérisée en ce que** la gaine comporte en outre en surface un dépôt de polymère organique choisi parmi les homopolymères et copolymères de monomères oléfiniques, modifiés par greffage au moyen de groupes polaires choisis parmi l'anhydride maléique, l'acide acrylique ou l'acide méthacrylique.

5. Fibre suivant l'une quelconque des revendications 1 à 3, **caractérisée en ce que** la gaine comporte une activation de la surface par corona, puis en surface d'un dépôt de polymère organique choisi parmi les homopolymères et copolymères de monomères oléfiniques, modifiés par greffage au moyen de groupes polaires choisis parmi l'anhydride maléique, l'acide acrylique ou l'acide méthacrylique.

6. Fibre suivant la revendication 4 ou 5, **caractérisée en ce que** ledit dépôt représente de 0,05 à 5 % en poids de matière sèche par rapport au poids total de la fibre.

7. Fibre suivant l'une quelconque des revendications précédentes, **caractérisée en ce que** le rapport volumique de la matière de la gaine par rapport à la matière de l'âme est choisi entre 50/50 et 95/5.

8. Fibre suivant l'une quelconque des revendications précédentes, **caractérisée en ce que** la teneur en élastomère thermoplastique dans la gaine de la fibre est de 5 à 50 % en volume par rapport au volume total de la matière de la gaine.

9. Fibre suivant l'une quelconque des revendications précédentes, **caractérisée en ce que** le titre de la fibre est compris entre 0,5 et 10 dtex.

10. Fibre suivant l'une quelconque des revendications précédentes, **caractérisée en ce que** sa longueur est comprise entre 2 et 20 mm.

11. Utilisation de la fibre selon l'une quelconque des revendications précédentes, pour le renforcement de produits en fibres-ciment.

12. Utilisation de la fibre selon l'une quelconque des revendications 1 à 10, pour le renforcement de produits en béton.

13. Produit en fibres-ciment comprenant des liants hydrauliques et des fibres de renforcement selon l'une quelconque des revendications 1 à 10.

14. Produit en béton comprenant des liants hydrauliques et des fibres de renforcement selon l'une quelconque des revendications 1 à 10.

15. Produit en fibres-ciment suivant la revendication 13, **caractérisé en ce que** les fibres de renforcement représentent de 0,3 à 4 % en poids par rapport au mélange sec total initial.

16. Produit en fibres-ciment suivant l'une quelconque des revendications 13 ou 15, **caractérisé en ce qu'**il consiste en une plaque ondulée ou plane.
